# FASCICULE DE BREVET EUROPEEN

(11) **EP 1 612 979 B1**
(45) Date de publication et mention de la délivrance du brevet: **17.05.2017**
(21) Numéro de dépôt: 05300451.1
(22) Date de dépôt: 03.06.2005
(51) Int. Cl.: H04J 3/06

(54) **Procédé de re-synchronisation de flux bénéficiant de services d'émulation de circuits, pour un réseau de communications à commutation de paquets**
Verfahren zur Neusynchronisierung eines Datenstroms unter Verwendung eines verbindungsorientierten Dienstes, für ein paketvermitteltes Kommunikationsnetzwerk
Method for re-synchronizing a data stream using circuit emulation services, for a packet-switched communications network

(30) Priorité: 30.06.2004 FR 0451372
(43) Date de publication de la demande: 04.01.2006
(73) Titulaire: ALCATEL LUCENT, 92100 Boulogne-Billancourt (FR)
(72) Inventeur: Le Sauze, Nicolas, 91440 Bures-sur-Yvette (FR); Noirie, Ludovic, 91620 Nozay (FR); Dotaro, Emmanuel, 91370 Verrières le Buisson (FR)
(74) Mandataire: Berthier, Karine

(56) Documents cités:
- WO-A-01/37486
- US-A1- 2002 018 449
- US-A1- 2002 131 408
- ANONYMOUS: "Circuit Emulation service Definitions, Framework and Requirements in Metro Ethernet Networks" METRO ETHERNET FORUM, [Online] 13 avril 2004 (2004-04-13), pages 1-65, XP002303735 Extrait de l'Internet: URL:http://www.metroethernetforum.org/PDFs /Standards/MEF3.pdf> [extrait le 2004-05-02]

## Description

L'invention concerne le domaine des réseaux de communications, et plus précisément le transport de flux de services synchrones par des réseaux de communications à commutation de paquets.

On entend ici par « flux » un ensemble de paquets émis par une même source dans un réseau et ayant en général une même destination. Un flux définit donc une succession de paquets d'une même connexion. Par ailleurs, un paquet d'un flux peut comporter tout type de données, y compris de la voix.

Comme le sait l'homme de l'art, de nombreux réseaux, offrant des services synchrones ou asynchrones, coexistent. C'est notamment le cas des réseaux dits « à commutation de circuits », de type synchrone, comme par exemple les réseaux TDM ou SONET/SDH, et des réseaux dits « à commutation de paquets », de type asynchrone, comme par exemple les réseaux MPLS, GMPLS, ATM, Frame Relay (FR), IP et Ethernet.

Afin qu'un réseau asynchrone puisse transporter des flux synchrones, il faut qu'il présente certaines performances, notamment en terme de synchronisation. En effet, lorsqu'un flux synchrone doit transiter par un chemin de transmission d'un réseau asynchrone, il faut prévoir des moyens de re-synchronisation de flux, de sorte que les paquets de ce flux issus du noeud de sortie (ou « egress node ») de ce chemin présentent une synchronisation conforme à celle que ces mêmes paquets présentaient en amont du noeud d'entrée (ou « ingress node ») dudit chemin. Il existe aujourd'hui deux principales techniques de re-synchronisation.

Une première technique de re-synchronisation consiste à équiper chaque noeud du réseau asynchrone d'interfaces de synchronisation d'entrée et de sortie, et à re-synchroniser chaque flux en sortie de chaque noeud du chemin de transmission qu'il emprunte. Ainsi, un trafic (ou flux) de type TDM est commuté en chaque noeud d'un chemin de transmission de façon asynchrone, puis transmis au noeud suivant après avoir été re-synchronisé.

L'inconvénient de cette première technique réside principalement dans le coût élevé qu'occasionne l'équipement complet de chaque noeud en interfaces de synchronisation.

Une seconde technique de re-synchronisation consiste à ne se préoccuper de la re-synchronisation des flux qu'une fois qu'ils sont parvenus dans le noeud de sortie du chemin de transmission qu'ils ont emprunté au sein du réseau asynchrone. En d'autres termes, pendant la traversée du réseau asynchrone, on ne se préoccupe pas de la synchronisation des flux. La re-synchronisation au niveau du noeud de sortie s'effectue généralement au moyen d'une interface dite de "service d'émulation de circuit" ou CES (pour « Circuit Emulation Service »), comme par exemple une interface « TDM-PSN IWF » (pour « TDM-Packet Switched Network InterWorking Function), telle que définie, par exemple à l'adresse Internet http://www.ietf.org/html.charters/pwe3-charter.html, par le groupe de travail PWE3 (Pseudo-Wire Emulation Edge to Edge) de l'IETF. Les flux bénéficiant de tels services d'émulation de circuits seront désignés dans la suite simplement par "flux CES".

L'inconvénient de cette seconde technique réside principalement dans le fait qu'elle ne peut être mise en oeuvre que dans des réseaux asynchrones dans lesquels les chemins de transmission (qui matérialisent des circuits émulés virtuels) ne comportent qu'un nombre limité de noeuds, typiquement inférieur ou égal à cinq. En effet, chaque noeud traversé contribue à une désynchronisation aléatoire des paquets du flux, c'est-à-dire est source d'une gigue appliquée au flux, et lorsque le nombre de noeuds d'un chemin de transmission devient supérieur à environ cinq, la gigue cumulée subie par un flux en transit devient difficilement compensable, voire non compensable, au niveau du noeud de sortie. Cela résulte du fait qu'en présence d'une gigue cumulée importante, la taille de la mémoire tampon (ou « buffer »), utilisée par le noeud de sortie pour re-synchroniser les flux de services d'émulation de circuits, n'est pas suffisante et/ou que ladite mémoire tampon devient très difficile à gérer.

Cette seconde technique ne peut donc être mise en oeuvre que dans certains réseaux asynchrones, comme par exemple des réseaux métropolitains de faible taille.

Aucune technique de re-synchronisation connue n'apportant une entière satisfaction, l'invention a donc pour but d'améliorer la situation, notamment en présence d'un réseau de moyenne ou grande taille.

Elle propose à cet effet un procédé de re-synchronisation de flux de paquets, pour un réseau de communications à commutation de paquets comportant une multiplicité de noeuds parmi lesquels au moins un noeud d'entrée et un noeud de sortie sont aptes à mettre en oeuvre des services d'émulation de circuits, un flux de paquets bénéficiant d'un tel service étant dit "flux CES", caractérisé en ce que pour un flux CES prévu pour emprunter à partir du noeud d'entrée un chemin associé passant par un ensemble de noeuds, cet ensemble comportant un sous-ensemble de noeuds aptes à re-synchroniser sélectivement les flux CES, une re-synchronisation effective dudit flux par un noeud choisi parmi ledit sous-ensemble, dit "noeud de synchronisation", est conditionnée par une valeur représentative de gigue cumulée subie jusqu'à ce noeud par ledit flux.

Il est important de noter qu'un « circuit émulé » est un service fourni aux extrémités du réseau. Ce circuit émulé donne naissance à un flux CES au sein du réseau et ce flux CES suit un chemin prédéterminé dans le réseau, lequel constitue un circuit virtuel en mode connecté (ou orienté connexion), c'est-à-dire pour un réseau de type MPLS ou GMPLS ou ATM ou encore Frame Relay (FR)). Par conséquent, un chemin donné est ici associé à un circuit émulé.

Ce procédé peut être mis en oeuvre de façon statique ou dynamique.

Dans la mise en oeuvre statique, chaque noeud de synchronisation, dit intermédiaire, dudit sous-ensemble est choisi lors de l'établissement du chemin correspondant.

Cette valeur (représentative de la gigue cumulée) peut être prédéterminée en fonction de la somme des gigues maximales qui peuvent être introduites par les noeuds de l'ensemble par lequel passe un chemin associé à un circuit émulé, y compris le noeud de synchronisation concerné, et qui sont placés entre ce noeud de synchronisation concerné et le noeud de synchronisation qui le précède. Par exemple, on recherche chaque noeud à partir duquel la somme précitée est supérieure à un seuil choisi et l'on choisit le noeud qui le précède comme noeud de synchronisation pour le chemin concerné.

En variante, on détermine en chaque noeud de l'ensemble, par lequel passe un chemin donné, la valeur de la gigue locale instantanée, puis on recherche chaque noeud du sous-ensemble à partir duquel la somme, de la valeur de sa gigue locale instantanée et des valeurs des gigues locales instantanées des noeuds de l'ensemble par lesquels passe le chemin et qui sont placés entre lui et le noeud de synchronisation qui le précède, est supérieure à un seuil choisi, de manière à choisir comme noeud de synchronisation le noeud qui le précède.

Dans la mise en oeuvre dynamique, on peut déterminer chaque noeud de synchronisation du sous-ensemble au fur et à mesure de la progression d'un flux CES dans un chemin associé à un circuit émulé. Dans ce cas, la détermination de noeuds consiste par exemple à estimer en chaque noeud par lequel passe un chemin par lequel transite un flux CES, la valeur de la somme de sa gigue courante (ou gigue locale instantanée) et des gigues introduites par les noeuds de l'ensemble par lesquels passe le chemin et qui sont placés entre lui et le noeud de synchronisation qui le précède, puis à comparer cette somme à de premier et second seuils, et lorsque la somme est inférieure au second seuil on passe au noeud suivant du chemin, tandis qu'en présence d'une somme comprise entre les premier et second seuils, le noeud concerné est choisi comme noeud de synchronisation pour le chemin associé au circuit émulé. En présence d'un flux dépassant le premier seuil on signale l'erreur au gestionnaire du réseau, car un tel cas n'est pas censé arriver.

On peut par exemple estimer en chaque noeud la valeur de la gigue locale instantanée qu'il introduit en fonction de la valeur de l'un au moins de ses paramètres locaux, comme par exemple le taux d'utilisation de la mémoire tampon qu'il utilise pour traiter les flux CES.

Enfin, que la mise en oeuvre soit statique ou dynamique, la (ou les) valeur(s) de(s) seuil(s), déterminant le besoin de re-synchronisation, à appliquer à un flux CES reçu dans un noeud du sous-ensemble, peut être éventuellement choisie, en complément, en fonction de la qualité de service (QoS) associée audit flux.

L'invention est particulièrement bien adaptée, bien que de façon non exclusive, aux réseaux asynchrones orientés connexion, comme par exemple les réseaux MPLS, GMPLS, ATM et Frame Relay (ou FR).

D'autres caractéristiques et avantages de l'invention apparaîtront à l'examen de la description détaillée ci-après, et des dessins annexés, sur lesquels :
- la figure 1 illustre de façon schématique un exemple de réseau asynchrone de type PSN mettant en oeuvre un procédé selon l'invention dans lequel les noeuds de synchronisation d'un sous-ensemble sont définis de façon statique, et
- la figure 2 illustre de façon schématique un exemple de réseau asynchrone de type PSN mettant en oeuvre un procédé selon l'invention dans lequel les noeuds de synchronisation d'un sous-ensemble sont définis de façon dynamique.

Les dessins annexés pourront non seulement servir à compléter l'invention, mais aussi contribuer à sa définition, le cas échéant.

L'invention a pour objet de permettre une re-synchronisation distribuée de flux bénéficiant de services d'émulation de circuits (ou flux CES) au sein d'un réseau (asynchrone) à commutation de paquets.

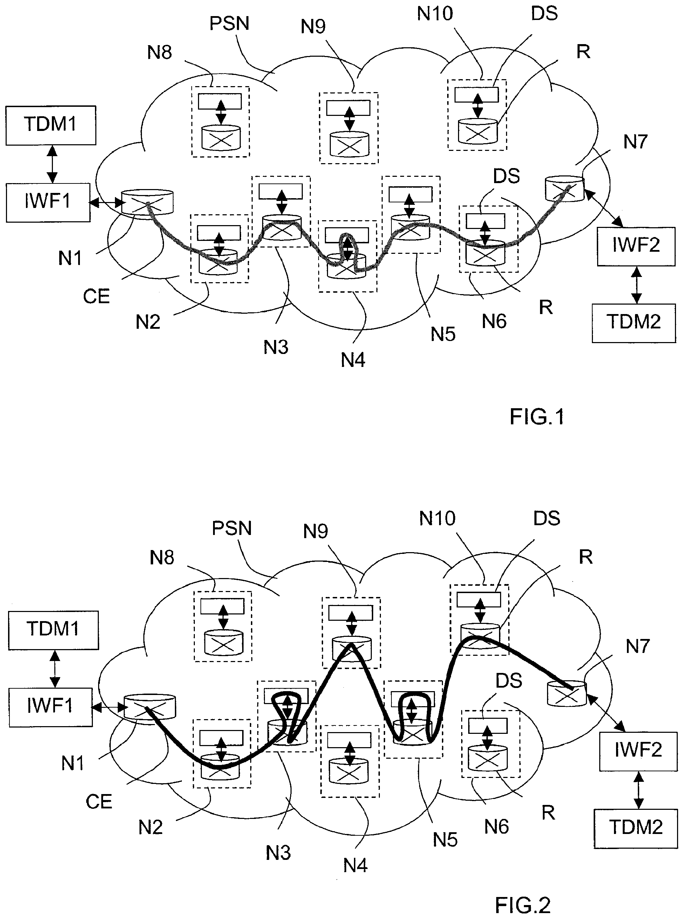

On se réfère tout d'abord à la figure 1 pour décrire un réseau asynchrone permettant de mettre en oeuvre un procédé de re-synchronisation distribuée selon l'invention.

On considère dans ce qui suit que le réseau asynchrone est de type PSN (pour « Packet Switched Network »), orienté connexion, comme par exemple un réseau MPLS (pour « Multi Protocol Label Switching ») ou GMPLS (pour « Generalized MPLS »). Mais, bien entendu, l'invention n'est pas limitée à ce type de réseau. Elle concerne en effet tous les réseaux assurant des services asynchrones, et notamment les réseaux à commutation de paquets (ou PSN).

Le réseau PSN comprend une multiplicité d'équipements de réseau constituant des noeuds Ni (ici i = 1 à 10, mais il peut prendre n'importe quelle valeur supérieure ou égale à trois, et de préférence supérieure à cinq). Ces noeuds Ni sont raccordés les uns aux autres et chargés de router entre eux des flux notamment de type CES, de sorte qu'ils puissent transiter par le réseau PSN.

Les noeuds Ni sont ce que l'homme de l'art appelle des commutateurs de paquets (ou « packet switches »), comme par exemple des routeurs à commutation d'étiquette (ou « label switch routers ») R.

Parmi ces noeuds Ni, certains constituent ce que l'on appelle un noeud d'entrée (ou « ingress node ») ou un noeud de sortie (ou « egress node »). De tels noeuds d'entrée et de sortie sont placés à deux « extrémités » du réseau PSN et sont chacun raccordés à au moins un réseau assurant des services synchrones, comme par exemple un réseau TDM (pour « Time Division Multiplexing ») ou un réseau optique SONET/SDH. Un noeud d'entrée est couplé à un noeud de sortie via un chemin de transmission définissant une connexion virtuelle passant par un ensemble de noeuds du réseau PSN.

L'ensemble de noeuds définissant un chemin de transmission destiné à transmettre des flux CES, et donc associé à un circuit émulé (ou « emulated circuit »), est ci-après appelé, dans le seul souci d'une simplification, « circuit émulé virtuel CE ».

Dans l'exemple illustré sur la figure 1 (tout comme sur la figure 2), un circuit émulé virtuel CE relie le noeud N1 au noeud N7). Ici, le noeud N1 est raccordé à un premier réseau de type TDM (TDM1), via une interface de services IWF1, et constitue le noeud d'entrée du circuit émulé virtuel CE. Le noeud N7 est raccordé à un second réseau de type TDM (TDM2), via une interface de services IWF2, et constitue le noeud de sortie du circuit émulé virtuel CE. Le circuit émulé virtuel CE passe ici par les noeuds N1 à N7.

Les interfaces de service IWF1 et IWF2 sont ici de type TDM-PSN. Elles mettent en oeuvre des fonctions d'interfonctionnement (ou IWF pour « InterWorking Function ») chargées, notamment, de transformer en paquets (ou « paquettiser ») les « données » synchrones provenant de l'un des deux réseaux TDM, afin qu'elles puissent être transmises sous la forme de paquets asynchrones à l'autre réseau TDM, via le circuit émulé virtuel CE (pour ce qui concerne IWF1) et afin de refournir un service synchrone sur la base des paquets reçus pour ce qui concerne IWF2.

Des détails sur les circuits émulés empruntés par les flux de services d'émulation de circuits peuvent être notamment trouvés sur le site internet de l'IETF, par exemple dans le document « Requirements for edge-to-edge emulation of TDM circuits over Packet Switching Networks (PSN) », accessible à l'adresse Internet http://www.ietf.org/html.charters/pwe3-charter.html du groupe de travail PWE3 de l'IETF, ainsi que sur le site internet du MEF (Metro Ethernet Forum), par exemple dans le document « Requirements for circuit emulation services in Metro Ethernet Networks », accessible à l'adresse http://www.metroethernetforum.org/.

Le procédé selon l'invention consiste à re-synchroniser les flux CES qui empruntent un circuit émulé virtuel donné CE, à partir de son noeud d'entrée (ici N1), de façon distribuée, grâce à un sous-ensemble de noeuds d'un ensemble de noeuds du réseau PSN (ici N1 à N7). Ce sous-ensemble est constitué de noeuds aptes à re-synchroniser sélectivement les flux CES. Une re-synchronisation du flux par un noeud de synchronisation choisi parmi ce sous-ensemble sera effective en fonction d'une valeur représentative de gigue cumulée subie jusqu'à ce noeud par le flux.

Il est rappelé que la re-synchronisation est destinée à compenser la variation de délai de transmission subie par les paquets dans chaque noeud traversé d'un circuit émulé virtuel CE, du fait du placement des flux CES reçus dans une mémoire tampon (ou « buffer ») dédiée. Ce délai de transmission varie d'un noeud à l'autre en fonction des tailles de leurs mémoires tampon dédiées respectives et en fonction des taux d'utilisation de ces mémoires tampon dédiées. Cette variation de délai de transmission constitue pour un flux CES un retard variable, appelé gigue (ou « jitter »), qui se cumule d'un noeud à l'autre et qu'il faut annuler par une opération de re-synchronisation.

La constitution d'un sous-ensemble de noeuds de synchronisation peut se faire de façon statique ou dynamique.

La constitution statique consiste à (pré)déterminer à l'avance le ou les noeuds de synchronisation d'un sous-ensemble associé à un circuit émulé virtuel CE. Par exemple, cette prédétermination s'effectue avant la transmission des premiers flux CES via le circuit émulé virtuel CE, et de préférence au moment où l'on établit le circuit émulé virtuel CE.

Pour constituer un sous-ensemble de façon statique, on peut procéder comme suit. On détermine tout d'abord la gigue maximale que peut introduire chaque noeud d'un circuit émulé virtuel donné CE, compte tenu de sa constitution, et notamment de la taille de sa mémoire tampon dédiée, et/ou du taux d'utilisation maximal de cette dernière. Puis, on détermine un seuil au-delà duquel la gigue accumulée par un flux ne peut plus être facilement compensable, et l'on recherche le noeud à partir duquel la somme, des gigues maximales introduites par chacun des noeuds qui le précèdent, y compris la sienne, est supérieure au seuil. Le noeud qui le précède est alors choisi comme noeud de synchronisation pour le circuit émulé virtuel concerné CE. On réitère ensuite cette recherche, de proche en proche, jusqu'à parvenir au niveau du noeud de sortie (ici N7), afin de déterminer chaque noeud de synchronisation du sous-ensemble chargé de compenser la somme des gigues maximales depuis le noeud de synchronisation qui le précède.

Chaque noeud ainsi choisi est alors configuré par le réseau PSN afin de re-synchroniser systématiquement chaque flux CES qu'il va recevoir du circuit émulé virtuel CE auquel il appartient. Les noeuds qui ne sont pas choisis, et qui font partie du même circuit émulé virtuel CE que les noeuds de synchronisation choisis, routent (ou commutent) de façon transparente les flux CES qu'ils reçoivent, sans les re-synchroniser.

Ainsi, grâce à ce procédé, les ressources de re-synchronisation contenues dans les noeuds de l'ensemble du réseaux sont utilisées de façon optimale, c'est-à-dire seulement dans les noeuds où c'est nécessaire pour chaque flux considéré. Les ressources de re-synchronisation des autres noeuds sont alors disponibles pour traiter d'autre flux qui pourraient nécessiter simultanément des re-synchronisations.

Dans l'exemple illustré sur la figure 1, seul le noeud N4 a été choisi pour re-synchroniser les flux CES transmis dans le circuit émulé virtuel CE. Il constitue par conséquent l'unique noeud de synchronisation intermédiaire du sous-ensemble associé au circuit émulé virtuel CE. Bien entendu, une nouvelle re-synchronisation est prévue au niveau du noeud de sortie N7 afin de compenser la gigue accumulée par chaque flux CES depuis le noeud de synchronisation N4.

La durée de re-synchronisation, appliquée en chaque noeud de synchronisation d'un sous-ensemble associé à un circuit émulé virtuel CE, est de préférence prédéterminée. Elle peut être constante d'un noeud à l'autre d'un même sous-ensemble, ou bien variable. En effet, la somme des gigues maximales accumulée entre deux noeuds de synchronisation peut varier, et/ou la capacité de re-synchronisation peut varier d'un noeud de synchronisation à l'autre, de sorte qu'il peut être préférable de déterminer une durée de re-synchronisation pour chaque noeud de synchronisation d'un sous-ensemble associé à un circuit émulé virtuel CE.

Dans une variante de constitution statique, on estime tout d'abord en chaque noeud d'un circuit émulé virtuel donné CE, par lequel va devoir transiter un flux CES à transmettre dans le réseau, lors de l'établissement dudit circuit émulé virtuel CE, la valeur de la gigue locale instantanée (ou gigue courante).

Cette estimation peut par exemple se faire en fonction de la valeur de l'un au moins de ses paramètres locaux, comme par exemple le taux moyen d'utilisation de sa mémoire tampon dédiée aux flux CES. A cet effet, on peut utiliser les informations, représentatives des paramètres locaux en cours des noeuds, qui sont stockées dans une base de données du réseau PSN.

Puis, on détermine un seuil au-delà duquel la gigue accumulée par un flux ne pourrait plus être facilement compensable, et l'on recherche le noeud à partir duquel la somme, de sa gigue courante et des gigues que chaque noeud qui le précède est susceptible d'introduire au moment de l'estimation, est supérieure au seuil. Le noeud qui le précède est alors choisi comme noeud de synchronisation pour le circuit émulé virtuel concerné CE. On réitère ensuite cette recherche, de proche en proche, jusqu'à parvenir au niveau du noeud de sortie (ici N7), afin de déterminer chaque noeud de synchronisation du sous-ensemble chargé de compenser la somme des gigues courantes depuis le noeud de synchronisation qui le précède.

Chaque noeud ainsi choisi est alors configuré par le réseau PSN afin de re-synchroniser systématiquement chaque flux CES qu'il va recevoir du circuit émulé virtuel CE auquel il appartient. Les noeuds qui ne sont pas choisis, et qui transportent le même circuit émulé virtuel CE que les noeuds de synchronisation choisis, routent (ou commutent) de façon transparente les flux CES qu'ils reçoivent, sans les re-synchroniser.

La constitution dynamique consiste à déterminer, de préférence sensiblement en temps réel, les noeuds de synchronisation d'un sous-ensemble.

Cela peut se faire en déterminant les noeuds de synchronisation du sous-ensemble au fur et à mesure de la progression du flux CES dans le circuit émulé virtuel CE.

Dans ce cas, on estime en chaque noeud par lequel passe un circuit émulé virtuel donné CE par lequel transite un flux CES, la valeur de la somme de sa gigue courante (ou gigue locale instantanée) et des gigues courantes que les noeuds qui le précèdent ont introduites. Cette estimation peut par exemple se faire en fonction de la valeur de l'un au moins des paramètres locaux des noeuds, comme par exemple les taux d'utilisation instantané de leurs mémoires tampon dédiées aux flux CES.

Puis, on compare cette somme à un premier seuil au-delà duquel la gigue accumulée par un flux ne peut plus être facilement compensable, et à un second seuil en deçà duquel il n'est pas utile de procéder à la re-synchronisation. Si cette somme est inférieure au second seuil, on passe au noeud suivant du circuit émulé virtuel CE. Le noeud qui n'a pas été choisi route (ou commute) alors, de façon transparente, le flux CES qu'il reçoit, sans le re-synchroniser. En revanche, si la somme est comprise entre les premier et second seuils, le noeud concerné est choisi comme noeud de synchronisation pour le circuit émulé virtuel concerné CE. Ce noeud est alors configuré par le réseau PSN afin de re-synchroniser le prochain flux CES qu'il va recevoir du circuit émulé virtuel CE auquel il appartient.

On réitère ensuite la recherche, de proche en proche, jusqu'à parvenir au niveau du noeud de sortie (ici N7), afin de déterminer chaque noeud de synchronisation du sous-ensemble chargé de compenser la somme des gigues courantes depuis le noeud de synchronisation qui le précède. Chaque noeud choisi pour la re-synchronisation est immédiatement configuré par le réseau.

Dans l'exemple illustré sur la figure 2, le circuit émulé virtuel CE passe par les noeuds N1 à N3, N9, N5, N10 et N7, dans cet ordre. Deux noeuds de synchronisation N3 et N5 ont été choisis par le réseau PSN et définissent le sous-ensemble qui est associé au circuit émulé virtuel CE pour le transfert d'un flux CES. Bien entendu, une nouvelle re-synchronisation est prévue au niveau du noeud de sortie N7 afin de compenser la gigue accumulée par le flux CES depuis le noeud de synchronisation N5.

Un sous-ensemble éventuellement différent est ensuite choisi par le réseau PSN pour le flux CES suivant, compte tenu de l'évolution des capacités courantes des noeuds du réseau PSN.

La durée de re-synchronisation, appliquée en chaque noeud de synchronisation d'un sous-ensemble associé à un circuit émulé virtuel CE, peut être prédéterminée. Elle est par exemple choisie égale au premier ou au second seuil, ou bien à une valeur intermédiaire.

En variante, la durée de re-synchronisation appliquée en un noeud de synchronisation peut être choisie au moins en fonction de la valeur estimée de la gigue cumulée par le flux CES reçu depuis le précédent noeud de synchronisation. Il est rappelé que cette gigue cumulée est égale à la somme des gigues introduites par les noeuds précédant un noeud de synchronisation et situés après le noeud de synchronisation précédant.

Dans une autre variante, la durée de re-synchronisation appliquée en un noeud de synchronisation peut être choisie au moins en fonction des premier et second seuils utilisés pour le choisir. Ces premier et second seuils peuvent en effet différer d'un noeud à l'autre.

Par ailleurs, il est important de noter que, quelle que soit la mise en oeuvre (statique ou dynamique), la (ou les) valeur(s) de(s) seuils de re-synchronisation à appliquer à un flux CES reçu dans un noeud d'un sous-ensemble, peu(ven)t être également choisie(s) en fonction de la qualité de service (QoS) qui est associée audit flux. Ainsi, en jouant sur le nombre de noeuds de synchronisation intermédiaires constituant un sous-ensemble (et/ou sur les différents seuils) l'opérateur du réseau PSN peut instaurer différents niveaux de gigue correspondant à différents clients et/ou différents niveaux de qualité de service.

Afin de mettre en oeuvre un procédé selon l'invention, chaque noeud Ni du réseau PSN est pourvu d'un dispositif de synchronisation DS couplé au réseau PSN, par exemple à son système de gestion (ou NMS). Un tel dispositif de synchronisation DS peut être directement implanté dans le routeur à commutation d'étiquette R (ou le commutateur de paquets). Mais, en variante et comme illustré sur les figures 1 et 2, il peut être externe au routeur à commutation d'étiquette R (ou au commutateur de paquets), par exemple intégré dans un boîtier dédié, et raccordé à celui-ci.

Le dispositif de synchronisation DS peut donc être réalisé sous la forme de circuits électroniques, de modules logiciels (ou informatiques), ou d'une combinaison de circuits et de logiciels. Par exemple, chaque dispositif de synchronisation DS peut se présenter sous la forme d'une ou plusieurs interfaces de synchronisation de type IWF.

Lorsqu'un noeud de synchronisation reçoit un flux CES à re-synchroniser, il le communique à son dispositif de synchronisation DS afin qu'il lui applique la durée de re-synchronisation prévue. Une fois ce délai appliqué le dispositif de synchronisation DS communique le flux CES re-synchronisé à son noeud de synchronisation afin qu'il le transmette au noeud suivant du circuit émulé virtuel CE.

L'invention ne se limite pas aux modes de réalisation de dispositif de synchronisation DS, de routeur à commutation d'étiquette (ou commutateur de paquets) R, et de procédé de re-synchronisation distribuée décrits ci-avant, seulement à titre d'exemple, mais elle englobe toutes les variantes que pourra envisager l'homme de l'art dans le cadre des revendications ci-après.

## Revendications

1. Procédé de re-synchronisation de flux de paquets, pour un réseau de communications à commutation de paquets (PSN) comportant une multiplicité de noeuds (Ni) parmi lesquels au moins un noeud d'entrée (N1) et un noeud de sortie (N7) sont aptes à mettre en oeuvre des services d'émulation de circuits, un flux de paquets bénéficiant d'un tel service étant dit "flux CES", **caractérisé en ce que** pour un flux CES prévu pour emprunter à partir du noeud d'entrée (N1) un chemin associé (CE) passant par un ensemble de noeuds, cet ensemble comportant un sous-ensemble de noeuds aptes à re-synchroniser sélectivement les flux CES, une re-synchronisation effective dudit flux par un noeud choisi parmi ledit sous-ensemble, dit "noeud de synchronisation", est conditionnée par une valeur représentative de gigue cumulée subie jusqu'à ce noeud par ledit flux.

2. Procédé selon la revendication 1, **caractérisé en ce que** chaque noeud de synchronisation, dit intermédiaire, dudit sous-ensemble est choisi lors de l'établissement du chemin correspondant (CE).

3. Procédé selon la revendication 2, **caractérisé en ce que** ladite valeur représentative de gigue cumulée est prédéterminée, pour chaque noeud de synchronisation d'un sous-ensemble associé à un chemin (CE), en fonction de la somme de la gigue maximale qui peut être introduite par le noeud de synchronisation concerné et des gigues maximales qui peuvent être introduites par les noeuds dudit ensemble par lequel passe ledit chemin (CE) et qui sont placés entre ledit noeud de synchronisation concerné et le noeud de synchronisation qui le précède.

4. Procédé selon la revendication 3, **caractérisé en ce que** l'on recherche chaque noeud à partir duquel ladite somme devient supérieure à un seuil choisi et l'on choisit le noeud qui le précède comme noeud de synchronisation pour ledit chemin (CE).

5. Procédé selon la revendication 2, **caractérisé en ce que** ledit choix des noeuds de synchronisation consiste à estimer en chaque noeud (Ni) dudit ensemble, par lequel passe un chemin (CE), la valeur de la gigue locale instantanée qu'il introduit, puis à rechercher chaque noeud dudit sous-ensemble à partir duquel la somme, de la valeur de sa gigue locale instantanée et des valeurs des gigues locales instantanées des noeuds dudit ensemble par lesquels passe ledit chemin (CE) et qui sont placés entre lui et le noeud de synchronisation qui le précède, est supérieure à un seuil choisi, de manière à choisir comme noeud de synchronisation le noeud qui le précède.

6. Procédé selon la revendication 1, **caractérisé en ce que** l'on détermine chaque noeud de synchronisation dudit sous-ensemble au fur et à mesure de la progression d'un flux dans le chemin concerné (CE).

7. Procédé selon la revendication 6, **caractérisé en ce que** ladite détermination de noeuds consiste à estimer en chaque noeud (Ni) par lequel passe un chemin (CE) par lequel transite un flux, la valeur de la somme de sa gigue locale instantanée et des gigues introduites par les noeuds dudit ensemble par lesquels passe ledit chemin (CE) et qui sont placés entre lui et le noeud de synchronisation qui le précède, puis à comparer cette somme à de premier et second seuils, et lorsque ladite somme est inférieure au second seuil à passer au noeud suivant dudit chemin (CE), tandis qu'en présence d'une somme comprise entre lesdits premier et second seuils, ledit noeud concerné (Ni) est choisi comme noeud de synchronisation pour ledit chemin (CE).

8. Procédé selon l'une des revendications 5 à 7, **caractérisé en ce que** l'on estime en chaque noeud (Ni) la valeur de la gigue locale instantanée qu'il introduit en fonction de la valeur d'au moins un paramètre local choisi.

9. Procédé selon la revendication 8, **caractérisé en ce que** ledit paramètre local est le taux d'utilisation d'une mémoire tampon utilisée par ledit noeud (Ni) pour le traitement des flux CES.

10. Procédé selon l'une des revendications 4 à 9, **caractérisé en ce que** chaque valeur de seuil, déterminant un besoin de re-synchronisation à appliquer à un flux reçu dans un noeud (Ni) dudit sous-ensemble, est également choisie en fonction d'une qualité de service associée audit flux.

## Patentansprüche

1. Verfahren zur Resynchronisation von Paketströmen für ein paketvermitteltes Kommunikationsnetz (Packet Switched Network, PSN), welches eine Vielzahl von Knoten (Ni) umfasst, von denen mindestens ein Zugangsknoten (N1) und ein Ausgangsknoten (N7) dafür geeignet ist, Schaltungsemulierungsdienste auszuführen, wobei ein Paketstrom, der einen solchen Dienst nutzt, "Circuit-Emulation-Service-Strom" oder "CES-Strom" genannt wird, **dadurch gekennzeichnet, dass** für einen CES-Strom, der dafür vorgesehen ist, um ab dem Eingangsknoten (N1) einen assoziierten Pfad (CE) durch eine Gruppe von Knoten zu benutzen, wobei besagte Gruppe eine Untergruppe von Knoten umfasst, die dafür geeignet sind, die CES-Ströme selektiv zu resynchronisieren, eine wirksame Resynchronisation besagten Flusses durch einen aus besagter Untergruppe ausgewählten Knoten, "Synchronisierungsknoten" genannt, durch einen Wert konditioniert ist, der repräsentativ ist für den durch besagten Strom bis zu diesem Knoten akkumulierten Jitter.

2. Verfahren nach Anspruch 1, **dadurch gekennzeichnet, dass** jeder Synchronisierungsknoten, Vermittlungsknoten genannt, besagter Untergruppe nach dem Einrichten des entsprechenden Pfads (CE) ausgewählt wird.

3. Verfahren nach Anspruch 2, **dadurch gekennzeichnet, dass** der besagte, repräsentative Wert für den akkumulierten Jitter für jeden Synchronisierungsknoten einer mit einem Pfad (CE) assoziierten Untergruppe vordefiniert ist in Funktion der Summe des maximalen Jitter, der durch den betreffenden Synchronisierungsknoten weitergegeben werden kann, und des maximalen Jitter, der durch diejenigen Knoten besagter Gruppe, durch welche besagter Pfad (CE) führt, weitergegeben werden kann, welche zwischen dem besagten, betreffenden Synchronisierungsknoten und dem diesem vorgelagerten Synchronisierungsknoten liegen.

4. Verfahren nach Anspruch 3, **dadurch gekennzeichnet, dass** jeweils der Knoten gesucht wird, ab welchem besagte Summe über einem ausgewählten Schwellenwert liegt, und dass der diesem Knoten vorgelagerte Knoten als Synchronisierungsknoten für besagten Pfad (CE) ausgewählt wird.

5. Verfahren nach Anspruch 2, **dadurch gekennzeichnet, dass** besagte Auswahl der Synchronisierungsknoten darin besteht, an jedem Knoten (Ni) besagter Gruppe, durch welche ein Pfad (CE) führt, den momentanen Istwert des lokalen Jitter zu schätzen, und weiterhin in der Suche nach jedem betreffenden Knoten besagter Untergruppe, ab welchem die Summe des momentanen Istwerts des lokalen Jitter und der momentanen, lokalen Jitter-Istwerte der Knoten besagter Gruppe, durch welche besagter Pfad (CE) führt und die zwischen diesem und dem ihm vorgelagerten Synchronisierungsknoten liegen, über einem ausgewählten Schwellenwert liegt, dergestalt, dass als Synchronisierungsknoten der dem betreffenden Knoten vorgelagerte Knoten gewählt wird.

6. Verfahren nach Anspruch 1, **dadurch gekennzeichnet, dass** aus der Progression eines Stroms auf dem betreffenden Pfad (CE) nach und nach alle Synchronisierungsknoten besagter Untergruppe bestimmt werden.

7. Verfahren nach Anspruch 6, **dadurch gekennzeichnet, dass** besagtes Bestimmen von Knoten darin besteht, an jedem Knoten (Ni), durch welchen ein Pfad (CE) führt, auf dem ein Strom übertragen wird, den Wert der Summe seines momentanen lokalen Jitter-Istwerts und der Jitter zu schätzen, die von Knoten besagter Gruppe weitergegeben werden, durch welche besagter Pfad (CE) führt und die zwischen dem betreffenden Knoten und dem ihm vorgelagerten Synchronisierungsknoten liegen, daraufhin im Vergleichen besagter Summe mit ersten und zweiten Schwellenwerten, und wenn besagte Summe unter dem zweiten Schwellenwert liegt, zum folgenden Knoten besagten Pfades (CE) weiterzugehen, wohingegen bei einer Summe zwischen besagtem erstem und besagtem zweitem Schwellenwert besagter betreffender Knoten (Ni) als Synchronisierungsknoten für besagten Pfad (CE) ausgewählt wird.

8. Verfahren nach einem der Ansprüche 5 bis 7, **dadurch gekennzeichnet, dass** an jedem Knoten (Ni) in Funktion des Werts mindestens eines ausgewählten, lokalen Parameters der von dem betreffenden Knoten weitergegebene, momentane lokale Jitta-Istwert geschätzt wird.

9. Verfahren nach Anspruch 8, **dadurch gekennzeichnet, dass** besagter lokaler Parameter die Nutzungsrate eines Pufferspeichers ist, den besagter Knoten (Ni) für die Verarbeitung des CES-Stroms benutzt.

10. Verfahren nach einem der Ansprüche 4 bis 9, **dadurch gekennzeichnet, dass** jeder Schwellenwert, der eine Notwendigkeit einer auf einen in einem Knoten (Ni) besagter Untergruppe eingehenden Strom anzuwendenden Resynchronisation bestimmt, ebenfalls in Funktion einer mit besagtem Strom assoziierten Dienstgüte gewählt wird.

## Claims

1. A method for re-synchronizing packet flows, for a packet-switched communications network (PSN) comprising a multiplicity of nodes (Ni) of which at least one ingress node (N1) and one egress node (N7) are able to implement circuit emulation services, a packet flow benefiting from such a service being called "CES flows," **characterized in that** for a CES flow intended to take, from the ingress node (N1), an associated path (CE) passing through a set of nodes, that set comprising a subset of nodes able to selectively resynchronize the CES flows, an effective re-synchronization of said flow through a node chosen from among said subset, called the "synchronization node," is conditioned by a value representative of total jitter experienced by said flow all the way to that node.

2. A method according to claim 1, **characterized in that** each synchronization node, called intermediary, of said subset is chosen when the corresponding path (CE) is established.

3. A method according to claim 2, **characterized in that** said value representative of total jitter is predetermined, for each synchronization node of a subset associated with a path (CE), based on the sum of the maximum jitter that may be introduced by the synchronization node in question and the maximum jitters that may be introduced by the nodes of said set through which said path (CE) passes and which are located between said synchronization node in question and the synchronization node that precedes it.

4. A method according to claim 3, **characterized in that** each node is sought out from which said sum becomes greater than a chosen threshold, and the node which precedes it is chosen as the synchronization node for said path (CE).

5. A method according to claim 2, **characterized in that** said choice of synchronization nodes consists of estimating in each node (Ni) of said set, through which a path (CE) passes, the value of the instant local jitter that it introduces, then of searching for each node of said subset from which the sum of the value of its instant local jitter and of the instant local jitters of the nodes of said set through which said path (CE) passes and which are located between it and the synchronization node that precedes it, is greater than a chosen threshold, so as to choose as the synchronization node the node that precedes it.

6. A method according to claim 1, **characterized in that** each synchronization node of said subset is determined as a flow progresses within the path in question (CE).

7. A method according to claim 6, **characterized in that** said determination of nodes consists of estimating in each node (Ni) through which a path (CE) passes through which a flow travels, the value of the sum of its instant local jitter and of the instant local jitters of the nodes of said set through which said path (CE) passes and which are located between it and the synchronization node that precedes it, then of comparing that sum to first and second thresholds, and when said sum is less than the second threshold, to move on to the next node on said path (CE), while in the presence of a sum between said first and second thresholds, said node in question (Ni) is chosen as a synchronization node for said path (CE).

8. A method according to one of the claims 5 to 7, **characterized in that** in each node (Ni) the value of the instant local jitter that it introduces is estimated based on the value of at least one chosen local parameter.

9. A method according to claim 8, **characterized in that** said local parameter is the usage rate of a buffer memory used by said node (Ni) for the processing of CES flows.

10. A method according to one of the claims 4 to 9, **characterized in that** each threshold value, determining a re-synchronization need to apply to a flow received in a node (Ni) of said subset, is also chosen based on a quality of service function associated with said flow.
